# EUROPEAN PATENT SPECIFICATION

(11) **EP 3 985 788 B1**
(45) Date of publication and mention of the grant of the patent: **28.10.2026**
(21) Application number: 21745025.3
(22) Date of filing: 19.01.2021
(51) Int. Cl.: H01M 50/211, H01M 50/209, H01M 50/291, H01M 50/293, H01M 50/242, H01M 50/264, H01M 10/04

(54) **BATTERY MODULE, BATTERY RACK COMPRISING SAME BATTERY MODULE, AND POWER STORAGE SYSTEM DEVICE**
BATTERIEMODUL, BATTERIERACK MIT DEMSELBEN BATTERIEMODUL UND ENERGIESPEICHERSYSTEM
MODULE DE BATTERIE, RACK DE BATTERIE COMPRENANT LEDIT MODULE DE BATTERIE ET SYSTÈME DE STOCKAGE D'ÉNERGIE

(30) Priority: 22.01.2020 KR 20200008780
(43) Date of publication of application: 20.04.2022
(73) Proprietor: LG Energy Solution, Ltd., Seoul 07335 (KR)
(72) Inventor: IM, Young-Bin, Daejeon 34122 (KR); GANG, In-Jae, Daejeon 34122 (KR); AHN, Jong-Kyu, Daejeon 34122 (KR); BAE, Kyung-Hyun, Daejeon 34122 (KR); SHIN, Jin-Kyu, Daejeon 34122 (KR)
(74) Representative: Plasseraud IP
(86) International application number: PCT/KR2021/000764
(87) International publication number: WO 2021/150006

(56) References cited:
- EP-A1- 3 125 332
- WO-A1-2018/207608
- JP-A- 2014 150 039
- KR-A- 20170 013 005
- KR-A- 20170 103 701
- KR-A- 20190 066 731
- KR-A- 20190 066 731
- KR-A- 20190 074 712

## Description

### TECHNICAL FIELD

The present disclosure relates to a battery module, and a battery rack and an energy storage system including the battery module.

The present application claims priority to Korean Patent Application No. 10-2020-0008780 filed on January 22, 2020 in the Republic of Korea.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack or a battery rack. Thus, the number of battery cells included in the battery pack or the battery rack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack or a battery rack by using at least one battery module and adding other components.

The conventional battery module is generally configured to include at least one pressing plate between battery cells in order to minimize damage to the battery module when cell swelling occurs. The at least one conventional pressing plate is generally an EPP foam-type member and includes a plurality of protruding structures having an embossing shape.

However, in the conventional battery module, when cell swelling occurs at the battery cells, pressurization deviation may be generated among the battery cells due to uneven pressurization by the pressing plate including such an embossing-type structure.

If cell swelling occurs in the conventional battery module, the structural stability of the battery module is weakened due to pressurization deviation by the pressing plate, and battery lifespan performance is also deteriorated.

Therefore, there is a need to find a way for providing a battery module capable of minimizing pressurization deviation among battery cells, enhancing structural stability and increasing battery lifespan performance when cell swelling occurs, and a battery rack and an energy storage system including the battery module.

Further prior art is described in EP 3 125 332 A1, WO 2018/207608 A1 and KR 2019 0066731 A.

### DISCLOSURE

### Technical Problem

It is an object of the present disclosure to provide a battery module, which may minimize pressurization deviation among battery cells, and to provide a battery rack and an energy storage system including the battery module.

In addition, the present disclosure is directed to providing a battery module, which may reinforce structural stability, and providing a battery rack and an energy storage system including the battery module.

Moreover, the present disclosure is directed to providing a battery module, which may improve battery lifespan performance, and providing a battery rack and an energy storage system including the battery module.

### Technical Solution

These objects of the present disclosure are accomplished with a battery module having the features of claim 1 and a battery rack and an energy storages system with the features according to claims 5 and 6, respectively.

Dependent claims are directed on features of preferred embodiments of claim 1.

### Advantageous Effects

According to various embodiments as above, it is possible to provide a battery rack and an energy storage system including the battery module.

In addition, according to various embodiments as above, it is possible to provide a battery module, which reinforces structural stability, and providing a battery rack and an energy storage system including the battery module.

Moreover, according to various embodiments as above, it is possible to provide a battery module, which improves battery lifespan performance, and providing a battery rack and an energy storage system including the battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is a perspective view showing the battery module of FIG. 1, from which a module case is excluded.
FIG. 3 is an exploded perspective view showing a main part of the battery module of FIG. 2.
FIG. 4 is a diagram for illustrating a front buffer member of a buffer plate, employed at the battery module of FIG. 3.
FIG. 5 is a diagram for illustrating a rear buffer member of the buffer plate, employed at the battery module of FIG. 3.
FIG. 6 is a diagram for illustrating a pressing plate, employed at the battery module of FIG. 3.
FIG. 7 is a diagram for illustrating a support plate, employed at the battery module of FIG. 3.
FIGS. 8 to 13 are diagrams for illustrating a mechanism for eliminating pressurization deviation among battery cells when cell swelling occurs at the battery cells of a battery cell assembly, employed at the battery module of FIG. 1.
FIG. 14 is a diagram for illustrating a battery rack according to another embodiment of the present disclosure.
FIG. 15 is a diagram for illustrating an energy storage system according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

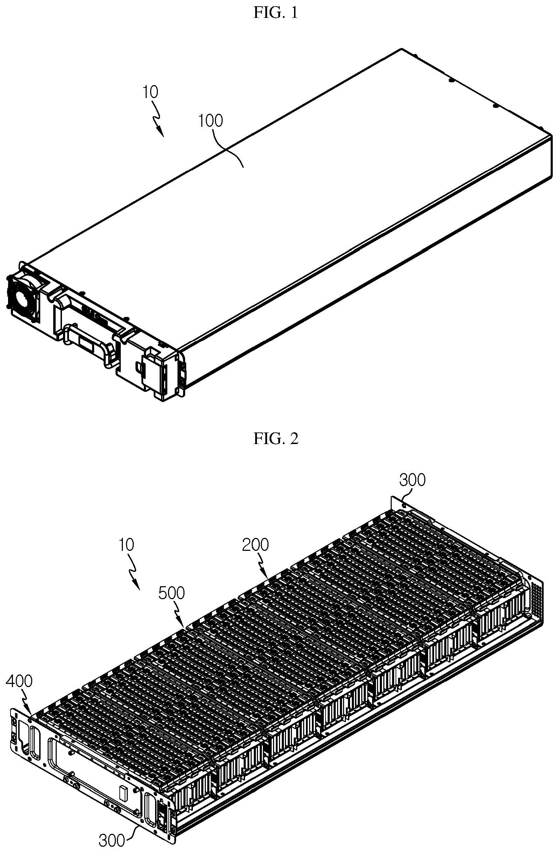

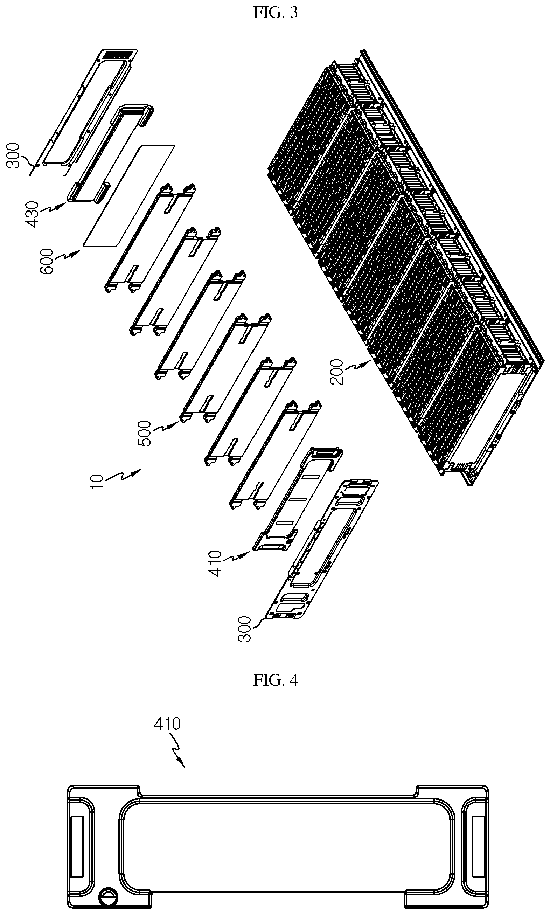

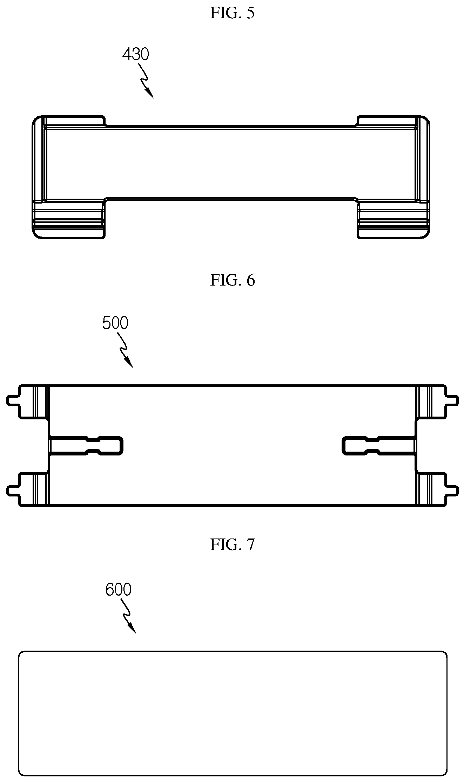

FIG. 1 is a diagram for illustrating a battery module according to an embodiment of the present disclosure, FIG. 2 is a perspective view showing the battery module of FIG. 1, from which a module case is excluded, FIG. 3 is an exploded perspective view showing a main part of the battery module of FIG. 2, FIG. 4 is a diagram for illustrating a front buffer member of a buffer plate, employed at the battery module of FIG. 3, FIG. 5 is a diagram for illustrating a rear buffer member of the buffer plate, employed at the battery module of FIG. 3, FIG. 6 is a diagram for illustrating a pressing plate, employed at the battery module of FIG. 3, and FIG. 7 is a diagram for illustrating a support plate, employed at the battery module of FIG. 3.

Referring to FIGS. 1 to 7, a battery module 10 includes a module case 100, a battery cell assembly 200, an end plate 300, a buffer plate 400, a pressing plate 500, and a support plate 600.

The module case 100 forms the appearance of the battery module 10, and is accommodated in the module case 100, the battery cell assembly 200, the end plate 300, the buffer plate 400, the pressing plate 500 and the support plate 600, explained later.

The battery cell assembly 200 is accommodated in the module case 100 and includes a plurality of battery cells 210 stacked on each other. The battery cell assembly 200 includes the plurality of battery cells 210, a plurality of cell cartridges 230, and a base plate 250.

The plurality of battery cells 210 are secondary batteries and may be provided as a pouch-type secondary battery, a rectangular secondary battery or a cylindrical secondary battery. Hereinafter, in this embodiment, it will be described that the plurality of battery cells 210 are provided as pouch-type secondary batteries.

The plurality of cell cartridges 230 support the plurality of battery cells 210. The plurality of cell cartridges 230 support one or more battery cells 210 and are stacked on each other along a stacking direction of the plurality of battery cells 210.

The base plate 250 supports the plurality of cell cartridges 230. To this end, the base plate 250 has an area capable of supporting all of the plurality of cell cartridges 230.

The end plate 300 is provided in a pair. The pair of end plates 300 are provided at both front and rear sides of the battery cell assembly 200, respectively.

The buffer plate 400 is provided in a pair. The pair of buffer plates 400 are provided to the pair of end plates 300 and are disposed at both front and rear sides of the battery cell assembly 200.

The pair of buffer plates 400 are formed such that the front surfaces and rear surfaces thereof in the stacking direction of the battery cell assembly 200, namely a front and rear direction of the battery cell assembly 200, have a flat shape. Here, at least one of the pair of buffer plates 400 makes a surface contact with a facing battery cell 210 of the battery cell assembly 200.

The pair of buffer plates 400 are provided as expanded polypropylene (EPP) members.

The pair of buffer plates 400 include a front buffer member 410 and a rear buffer member 430.

The front buffer member 410 is provided to a rear surface of the end plate 300 disposed at the front among the pair of end plates 300.

The rear buffer member 430 is provided to a front surface of the end plate 300 disposed at the rear among the pair of end plates 300. Meanwhile, the rear buffer member 430 includes a cable passage 435 through which a cable member such as an electric cable or sensing cable for connecting electric components of the battery module 10 may pass.

The pressing plate 500 is provided between the pair of buffer plates 400 and is disposed between the battery cells 210 of the battery cell assembly 200.

The pressing plate 500 is formed such that a front surface and a rear surface thereof in the stacking direction of the battery cell assembly 200, namely in the front and rear direction of the battery cell assembly 200, have a flat shape.

Here, the pressing plate 500 is disposed between the battery cells 210, respectively, to make a surface contact with a facing battery cell 210.

At least one pressing plate 500 or a plurality of pressing plates 500 may be provided. Hereinafter, in this embodiment, it will be described that the pressing plate 500 is provided in plural.

The plurality of pressing plates 500 are provided as expanded polypropylene (EPP) members.

The support plate 600 is disposed between the battery cell assembly 200 and any one of the buffer plates 400. Specifically, the support plate 600 is disposed between the battery cell assembly 200 and the rear buffer member 430 of the buffer plate 400.

The support plate 600 is configured such that a front surface and a rear surface thereof in the front and rear direction of the battery cell assembly 200 have a flat shape. The support plate 600 makes a surface contact with a facing battery cell 210 of the battery cell assembly 200.

Hereinafter, when cell swelling occurs at the battery cells 210 of the battery cell assembly 200 of the battery module 10 according to this embodiment, a mechanism for eliminating pressurization deviation among the battery cells 210 will be described in more detail.

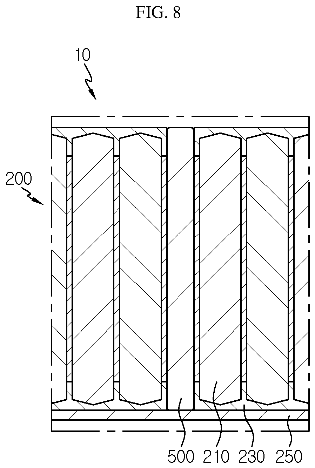

FIGS. 8 to 13 are diagrams for illustrating a mechanism for eliminating pressurization deviation among battery cells when cell swelling occurs at the battery cells of a battery cell assembly, employed at the battery module of FIG. 1.

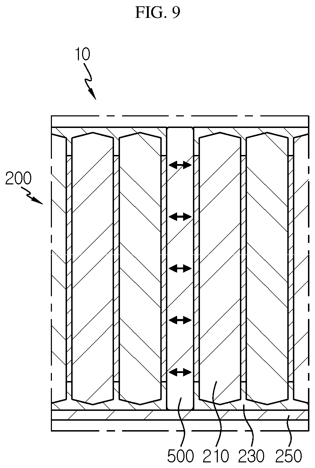

Referring to FIGS. 8 and 9, in the battery module 10, a cell swelling phenomenon may occur at the battery cells 210 of the battery cell assembly 200. According to the cell swelling phenomenon, cell expansion may occur in the front and rear direction of the battery cells 210, which is the stacking directions of the battery cells 210.

When cell swelling occurs, the plurality of pressing plates 500 according to this embodiment may uniformly press the facing front and rear surfaces of the battery cells 210 while making a surface contact with the facing battery cells 210.

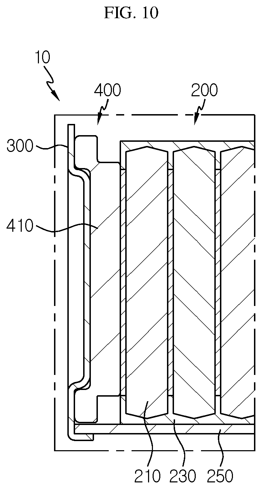

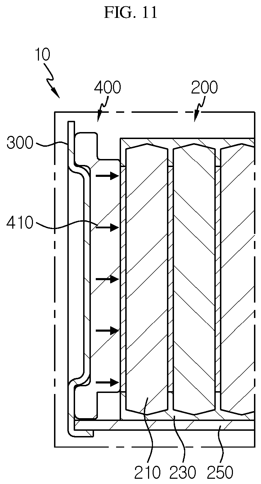

Referring to FIGS. 10 and 11, when the cell swelling occurs at the battery cells 210 of the battery cell assembly 200 of the battery module 10, the front buffer member 410 of the buffer plate 400 may also uniformly press the facing front surface of the battery cell 210 while making a surface contact with the facing battery cell 210.

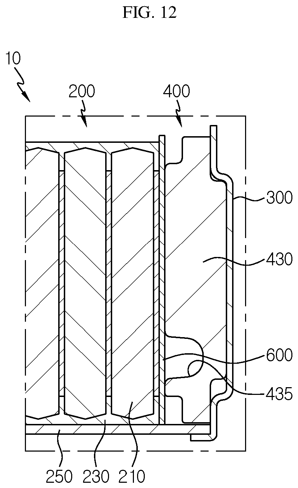

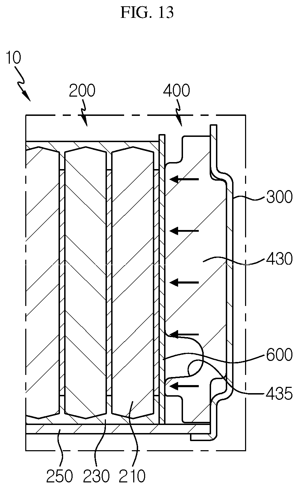

Referring to FIGS. 12 and 13, when cell swelling occurs at the battery cells 210 of the battery cell assembly 200 of the battery module 10, the rear buffer member 430 of the buffer plate 400 uniformly presses the facing rear surface of the battery cell 210 while making a surface contact with the facing battery cell 210, together with the support plate 600. In particular, the support plate 600 supplements the surface contact pressing force near the cable passage 435 of the rear buffer member 430.

As described above, in this embodiment, since the battery cells 210 may be pressed more effectively by means of the buffer plate 400, the pressing plate 500 and the support plate 600 when cell swelling occurs at the battery cells 210, the pressurization deviation among the battery cells 210 may be effectively minimized.

In this embodiment, since the pressurization deviation among the battery cells 210 is eliminated, it is possible to further enhance the structural stability of the battery module 10 and further improve the lifespan performance of the battery module 10.

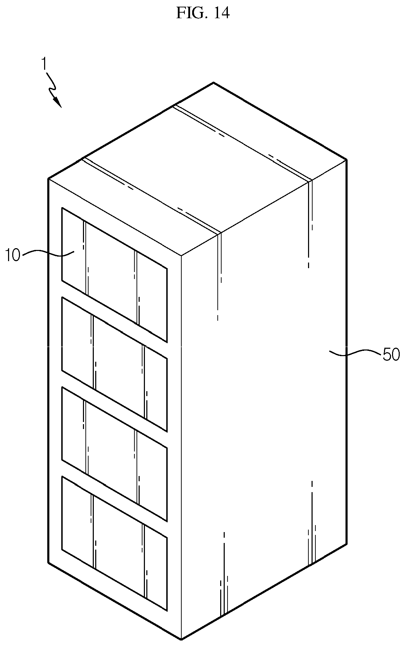

FIG. 14 is a diagram for illustrating a battery rack according to an embodiment of the present disclosure.

Referring to FIG. 9, a battery rack 1 includes the plurality of battery modules 10 of the former embodiment, and a rack case 50 for accommodating the plurality of battery modules 10.

Since the battery rack 1 of this embodiment includes the battery module 10 of the former embodiment, the battery rack 1 has all advantages of the battery module 10 of the former embodiment.

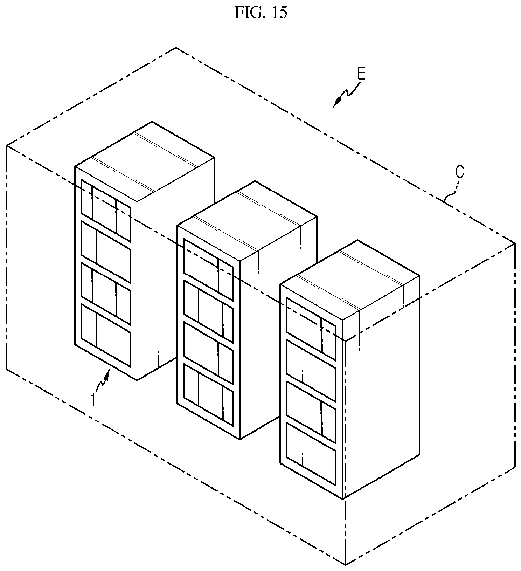

FIG. 15 is a diagram for illustrating an energy storage system according to an embodiment of the present disclosure.

Referring to FIG. 15, an energy storage system E may be used for home or industries as an energy source. The energy storage system E includes at least one battery rack 1 of the former embodiment, or a plurality of battery racks 1 in this embodiment, and a rack container C for accommodating the plurality of battery racks 1.

Since the energy storage system E of this embodiment includes the battery rack 1 of the former embodiment, the energy storage system E has all advantages of the battery rack 1 of the former embodiment.

According to various embodiments as above, it is possible to provide a battery module 10, which may improve manufacture efficiency, secure product reliability and control cell swelling, and to provide a battery rack 1 and an energy storage system E including the battery module 10.

## Claims

1. A battery module (10), comprising:
a battery cell assembly (200) having a plurality of battery cells (210) stacked on each other;
a pair of end plates (300) provided at both front and rear sides of the battery cell assembly (200);
a pair of buffer plates (400) provided to the pair of end plates (300) and disposed at both front and rear sides of the battery cell assembly (200); and
at least one pressing plate (500) provided between the pair of buffer plates (400) and disposed between the battery cells (210) of the battery cell assembly (200),
wherein the pair of buffer plates (400) including a front buffer member (410) and a rear buffer member (430) and the at least one pressing plate (500) are configured such that front surfaces and rear surfaces thereof in a front and rear direction of the battery cell assembly (200) have a flat shape,
wherein the pair of buffer plates (400) and the at least one pressing plate (500) are provided as expanded polypropylene members,
wherein the rear buffer member (430) includes a cable passage (435),
wherein at least one of the pair of buffer plates (400) is configured to make a surface contact with a facing battery cell (210) of the battery cell assembly (200), and
wherein the battery module further comprises:
a support plate (600) being configured such that a front surface and a rear surface thereof in the front and rear direction of the battery cell assembly (200) have a flat shape, and being disposed between the battery cell assembly (200) and the rear buffer member (430), which makes surface contact with a facing battery cell (210) to supplement the surface contact pressing force of the rear buffer member (430) near the cable passage (435) of the rear buffer member (430).

2. The battery module according to claim 1,
wherein the pressing plate (500) is provided in plural, and
the plurality of pressing plates (500) are disposed between the battery cells (210), respectively, to make a surface contact with a facing battery cell (210).

3. A battery rack (1), comprising:
at least one battery module (10) as defined in claim 1; and
a rack case (50) configured to accommodate the at least one battery module (10).

4. An energy storage system (E), comprising: at least one battery rack (1) as defined in claim 3.

## Patentansprüche

1. Batteriemodul (10), umfassend:
eine Batteriezellenanordnung (200) mit einer Vielzahl von aufeinander gestapelten Batteriezellen (210);
ein Paar Endplatten (300), die sowohl an der Vorder- als auch an der Rückseite der Batteriezellenanordnung (200) vorgesehen sind;
ein Paar Pufferplatten (400), die an dem Paar Endplatten (300) vorgesehen und sowohl an der Vorder- als auch an der Rückseite der Batteriezellenanordnung (200) angeordnet sind; und
mindestens eine Druckplatte (500), die zwischen dem Paar Pufferplatten (400) vorgesehen und zwischen den Batteriezellen (210) der Batteriezellenanordnung (200) angeordnet ist,
wobei das Paar Pufferplatten (400), das ein vorderes Pufferelement (410) und ein hinteres Pufferelement (430) umfasst, und die mindestens eine Druckplatte (500) so konfiguriert sind, dass Vorderflächen und Rückflächen davon in einer Vorder- und Rückrichtung der Batteriezellenanordnung (200) eine flache Form aufweisen,
wobei das Paar Pufferplatten (400) und die mindestens eine Druckplatte (500) als Elemente aus expandiertem Polypropylen vorgesehen sind,
wobei das hintere Pufferelement (430) einen Kabeldurchgang (435) aufweist,
wobei mindestens eine des Paares von Pufferplatten (400) so konfiguriert ist, dass sie einen Flächenkontakt mit einer gegenüberliegenden Batteriezelle (210) der Batteriezellenanordnung (200) herstellt, und
wobei das Batteriemodul ferner umfasst:
eine Trägerplatte (600), die so konfiguriert ist, dass eine Vorderfläche und eine Rückfläche davon in der Vorder- und Rückrichtung der Batteriezellenanordnung (200) eine flache Form aufweisen, und die zwischen der Batteriezellenanordnung (200) und dem hinteren Pufferelement (430) angeordnet ist, das einen Flächenkontakt mit einer gegenüberliegenden Batteriezelle (210) herstellt, um die Flächenkontakt-Presskraft des hinteren Pufferelements (430) in der Nähe des Kabeldurchgangs (435) des hinteren Pufferelements (430) zu ergänzen.

2. Batteriemodul nach Anspruch 1,
wobei die Druckplatte (500) mehrfach vorgesehen ist, und
die Vielzahl von Druckplatten (500) jeweils zwischen den Batteriezellen (210) angeordnet sind, um einen Flächenkontakt mit einer gegenüberliegenden Batteriezelle (210) herzustellen.

3. Batteriegestell (1), umfassend:
mindestens ein Batteriemodul (10) nach Anspruch 1; und
ein Gestellgehäuse (50), das so konfiguriert ist, dass es das mindestens eine Batteriemodul (10) aufnimmt.

4. Energiespeichersystem (E), umfassend:
mindestens ein Batteriegestell (1) nach Anspruch 3.

## Revendications

1. Module de batterie (10), comprenant :
un ensemble de cellules de batterie (200) ayant une pluralité de cellules de batterie (210) empilées les unes sur les autres ;
une paire de plaques d'extrémité (300) prévues à la fois sur les côtés avant et arrière de l'ensemble de cellules de batterie (200) ;
une paire de plaques tampons (400) prévues sur la paire de plaques d'extrémité (300) et disposées à la fois sur les côtés avant et arrière de l'ensemble de cellules de batterie (200) ; et
au moins une plaque de pression (500) prévue entre la paire de plaques tampons (400) et disposée entre les cellules de batterie (210) de l'ensemble de cellules de batterie (200),
dans lequel la paire de plaques tampons (400) comprenant un élément tampon avant (410) et un élément tampon arrière (430) et l'au moins une plaque de pression (500) sont configurées de telle sorte que des surfaces avant et des surfaces arrière de celles-ci dans une direction avant et arrière de l'ensemble de cellules de batterie (200) ont une forme plate,
dans lequel la paire de plaques tampons (400) et l'au moins une plaque de pression (500) sont prévues en tant qu'éléments en polypropylène expansé,
dans lequel l'élément tampon arrière (430) inclut un passage de câble (435),
dans lequel au moins l'une de la paire de plaques tampons (400) est configurée pour établir un contact de surface avec une cellule de batterie en regard (210) de l'ensemble de cellules de batterie (200), et
dans lequel le module de batterie comprend en outre :
une plaque de support (600) étant configurée de telle sorte qu'une surface avant et une surface arrière de celle-ci dans la direction avant et arrière de l'ensemble de cellules de batterie (200) ont une forme plate, et étant disposée entre l'ensemble de cellules de batterie (200) et l'élément tampon arrière (430), qui établit un contact de surface avec une cellule de batterie en regard (210) pour compléter la force de pression de contact de surface de l'élément tampon arrière (430) près du passage de câble (435) de l'élément tampon arrière (430).

2. Module de batterie selon la revendication 1,
dans lequel la plaque de pression (500) est prévue en plusieurs exemplaires, et
la pluralité de plaques de pression (500) sont disposées entre les cellules de batterie (210), respectivement, pour établir un contact de surface avec une cellule de batterie en regard (210).

3. Bâti de batterie (1), comprenant :
au moins un module de batterie (10) tel que défini dans la revendication 1 ; et
un boîtier de bâti (50) configuré pour recevoir l'au moins un module de batterie (10).

4. Système de stockage d'énergie (E), comprenant :
au moins un bâti de batterie (1) tel que défini dans la revendication 3.
